# EUROPÄISCHE PATENTSCHRIFT

(11) **EP 1 340 536 B1**
(45) Veröffentlichungstag und Bekanntmachung des Hinweises auf die Patenterteilung: **15.04.2009**
(21) Anmeldenummer: 03002949.0
(22) Anmeldetag: 11.02.2003
(51) Int. Cl.: B01J 19/30, B01J 19/32, C04B 20/00

(54) **Verwendung von Formkörpern**
Use of shaped bodies
Utilisation de corps moulés

(30) Priorität: 28.02.2002 DE 10208930
(43) Veröffentlichungstag der Anmeldung: 03.09.2003
(73) Patentinhaber: Rauschert Verfahrenstechnik GmbH, 96349 Steinwiesen (DE)
(72) Erfinder: Schaber, Karlheinz, 76316 Malsch (DE); Heberle, Arthur, 68163 Mannheim (DE)
(74) Vertreter: Weber, Roland

(56) Entgegenhaltungen:
- EP-A- 0 933 388
- WO-A-00/39049
- WO-A-03/051544
- CH-A- 268 258

## Beschreibung

In vielen Stoffaustauschkolonnen werden Füllkörper in ungeordneter Schüttung oder als geordnete Packungen verwendet. Bestimmte Stoffe, die in solchen Stoffaustauschkolonnen verwendet werden, führen zu Ablagerungen auf den Füllkörpern oder Packungen, sogenanntem "Fouling", was derzeit die Wirksamkeit der Stoffaustauschkolonne vermindert, so daß die Füllkörper oder Packungen ausgetauscht oder gereinigt werden müssen. In Absorptionsanlagen mit Füllkörpern und Packungen ergibt Fouling einen beträchtlichen Anstieg des Druckverlustes und damit des Energiebedarfes der Anlage. Je häufiger die Anlage gereinigt werden muß, desto höher werden die Gesamtkosten des Betriebs der Anlage.

Die WO 00/39049 beschreibt ein Form- oder Beschichtungsmaterial aus einer Dispersion von Bindemittel, Füllstoff und gegebenenfalls üblichen Additiven, wobei der Füllstoff dadurch gekennzeichnet ist, daß er eine wenigstens bimodale Teilchenvergrößerung aufweist, wobei das Gewichtsverhältnis der größeren Teilchen mit einem Teilchendurchmesser von mindestens 5 µm zu den kleineren Teilchen mit einem mittleren Teilchendurchmesser von höchstens 3 µm bei 0,01:1 bis 12:1 liegt und wobei der statische Anfangskontaktwinkel nach 3 Minuten Äquilibrieren größer als 130° ist. Dieses Form- oder Beschichtungsmaterial wird bevorzugt für Fassaden und andere Bauwerksteile verwendet.

Die der Erfindung zugrundeliegende Aufgabe bestand darin, die Wirksamkeit von Stoffaustauschkolonnen zu verbessern.

Zur Lösung dieser Aufgabe verwendet man Formkörper mit einer Oberflächenstruktur aus auf der Oberfläche der Formkörper befestigten Teilchen mit einer wenigstens bimodalen Teilchengrößenverteilung, wobei ein Teilchengrößenbereich (A) einen mittleren Teilchendurchmesser von mindestens 5 µm besitzt und ein anderer Teilchengrößenbereich (B) einen mittleren Teilchendurchmesser von höchstens 3 µm besitzt, und wobei das Gewichtsverhältnis der Teilchen des Teilchengrößenbereichs (A) zu den Teilchen des Teilchengrößenbereiches (B) im Bereich von 0,01:1 bis 12:1 liegt, und wobei der statische Kontaktwinkel nach dreiminütiger Äquilibrierung größer als 130° ist, als Füllkörper oder Packungen von Stoffaustauschkolonnen.

Der Kontaktwinkel an der Dreiphasenberührungslinie zwischen Festkörper, Flüssigkeit und Gas kann gemäß der WO 00/39 049 bestimmt werden, wie beispielsweise mit dem Kontaktwinkelmeßgerät G1 der Firma Krüss. Dabei wird auf die Oberfläche des Füllkörpers oder der Packung ein Tropfen destilliertes Wasser (ca. 20 µl) aufgegeben und der Kontaktwinkel durch Ablesen an der Goniometerskala gemessen. Vom Aufbringen des Tropfens bis zur Messung wartet man drei Minuten, damit sich das System äquilibrieren kann.

Die Einstellung des statischen Kontaktwinkels kann mit Hilfe hydrophobierender Stoffe erfolgen.

Ohne Bindung an eine Theorie wird angenommen, daß durch die angegebene Oberflächenstruktur die Adhäsion gegenüber Oberflächenstrukturen außerhalb der Erfindung geringer ist.

Es ist denkbar, daß eine solche Oberflächenstruktur des Formkörpers durch Anätzen der Formkörperoberfläche erzielt wird. In diesem Fall bestehen die Teilchen mit wenigstens bimodaler Teilchengrößenverteilung aus einem Stück mit dem Formkörper selbst. Es ist aber auch möglich, die genannten Teilchen in den Teilchengrößenbereichen (A) und (B) mit Hilfe eines Beschichtungsmaterials auf dem Formkörper aufzubringen. Solche Beschichtungsmaterialien, die zur Befestigung der besagten Teilchen auf der Formkörperoberfläche geeignet sind, sind in der WO 00/39 049 beschrieben. Bei Verwendung solcher Beschichtungsmaterialien, die die Teilchen mit einer wenigstens bimodalen Teilchengrößenverteilung als Füllstoff enthalten, werden die Teilchen mit Hilfe des enthaltenen Bindemittels auf der Oberfläche des Formkörpers befestigt oder aufgeklebt.

In der WO 00/39 049 sind auch Formmassen beschrieben, die teigige oder pastöse Konsistenz haben können und nach bekannten Formverfahren, wie durch Extrudieren aus einem Formmundstück, durch Spritzguß oder dergleichen, zu Formlingen verarbeitet werden, die dann den erfindungsgemäßen Formkörper bilden.

Da jedoch die Herstellung von Füllkörpern aus den in der WO 00/39 049 beschriebenen Formmassen Beschränkungen bezüglich des Materials wie auch der Form auferlegt, ist das bevorzugte Verfahren zur Herstellung der erfindungsgemäß verwendeten Formkörper jenes der Beschichtung vorgefertigter Formkörper mit einem fließfähigen Beschichtungsmittel. Dieses Beschichtungsmittel ist gewöhnlich eine Dispersion von Bindemittel, Füllstoff und gegebenenfalls üblichen Additiven, vorzugsweise in wäßriger Dispersion. Die Dispersion kann allerdings auch organische Lösemittel enthalten, wie aliphatische oder aromatische Kohlenwasserstoffe, beispielsweise Toluol, Ester oder Ketone, die als Lösemittel für Bindemittel und Lacke bekannt sind.

Zweckmäßig umfaßt das enthaltene Bindemittel, jeweils bezogen auf das Gesamtgewicht des Feststoffanteils des Form- oder Beschichtungsmaterials, 0,2 bis 20 Gew.% wenigstens eines hydrophoben Harzes, Harzvorproduktes und/oder Wachses und 0,5 bis 40 Gew.% wenigstens eines zusätzlichen aushärtenden Bindemittels.

Vorzugsweise sind die verwendeten hydrophoben Harze oder Wachse zusätzlich oleophob. Die hydrophoben Harze oder Wachse, vorzugsweise Harze, sind zweckmäßig Siliconharze, die im Falle wäßriger Dispersion in Wasser emulgierbar oder emulgiert sein müssen. Statt Siliconharzen kommen jedoch auch andere Harze in Betracht, wie Fluorpolymere. Die Harzvorprodukte können beispielsweise Silane sein, die zu Siliconharzen polymerisieren. Wesentlich ist, daß diese Harze hydrophob sind. Wachse sind von Haus aus hydrophob und können daher im Regelfall als Anteil des hydrophoben Bindemittels eingesetzt werden.

Die zusätzlich aushärtenden Bindemittel können organischer oder anorganischer Natur sein. Beispiele organischer aushärtender Bindemittel sind Alkydharze, Polyvinylchlorid, Chlorkautschuk, Polyurethane und Epoxidharze. Beispiele anorganischer aushärtender Bindemittel sind hydraulische Bindemittel, wie Zement oder Kalk. Vorzugsweise verwendet man organische Polymere als zusätzliche aushärtende Bindemittel.

Die anorganischen oder organischen Füllstoffe mit wenigstens bimodaler Teilchengrößenverteilung, die gegebenenfalls hydrophobiert sein können, werden zweckmäßig so ausgewählt, daß die Teilchen des ersteren Teilchengrößenbereiches (A) einen mittleren Teilchendurchmesser im Bereich von 5 bis 100 µm, vorzugsweise im Bereich von 8 bis 40 µm, insbesondere im Bereich von 10 bis 40 µm, besonders von 10 bis 20 µm haben. Die Teilchen des letzteren Teilchengrößenbereiches (B) haben vorzugsweise einen mittleren Teilchendurchmesser von höchstens 0,1 µm, vorzugsweise im Breich von 0,1 bis 0,8 µm. Daneben können die Beschichtungsstoffe auch noch Füllstoffe anderer Teilchengrößenbereiche enthalten und damit eine mehr als bimodale, d. h. eine multimodale Teilchengrößenverteilung besitzen. Insbesondere im Falle von Putzen können zusätzliche Anteile groberer Körnungen vorhanden sein. Der mittlere Teilchendurchmesser errechnet sich aus der Summe der jeweils größten Teilchendurchmesser, geteilt durch die Anzahl der Teilchen.

Das Gewichtsverhältnis der Teilchen des ersten Teilchngrößenbereiches (A) zu den Teilchen des letzten Teilchengrößenbereiches (B) liegt vorzugsweise im Bereich von 0,3 : 1 bis 10 : 1, besonders im Bereich von 1,0 : 1 bis 2,5 : 1. Die Füllstoffe mit wenigstens bimodaler Teilchengrößenverteilung können ein einheitlicher Füllstoff unterschiedlicher Teilchengrößen oder Füllstoffgemische sein, insbesondere solche, in denen der Teilchengrößenbereich (A) von einem Füllstoff und der Teilchengrößenbereich (B) von einem anderen Füllstoff gebildet wird. Selbstverständlich können dabei die Teilchengrößenbereiche (A) und (B) jeweils auch von mehreren unterschiedlichen Füllstoffarten gebildet werden. Die Füllstoffe können organischer oder anorganischer Natur sein, vorzugsweise anorganischer Natur. Der Füllstoff mit dem Teilchengrößenbereich (A) kann beispielsweise Siliciumdioxid, Calciumcarbonat oder Teflon sein. Der Füllstoff mit dem Teilchengrößenbereich (B) kann ebenfalls Siliciumdioxid oder auch beispielsweise Titanoxid sein. Es ist zweckmäßig, für den Teilchengrößenbereich (A) Cristobalit und für den Teilchengrößenberich (B) Titanoxid, ein Buntpigment oder einen Füllstoff zu verwenden. Es können aber auch mehrere Füllstoffe eingesetzt werden. Als Quarzmehl wird zweckmäßig Cristobalit benutzt.

Das Bindemittel enthält zweckmäßig, jeweils bezogen auf den Feststoffanteil des Beschichtungsstoffes, vorzugsweise 1,5 bis 30, besonders 2 bis 15 Gew.%, ganz besonders bis 6 Gew.% zusätzliches aushärtendes Bindemittel und 1 bis 15, besonders 1,5 bis 4 Gew.% hydrophobes Harz, Harzvorprodukt oder Wachs, besonders Siliconharz, Silane, Siloxane oder Polysiloxane.

Wie bereits erwähnt, wählt man vorzugsweise Bindemittel aus, die einen möglichst geringen Anteil wasserlöslicher und/oder hydrophiler Stoffe, wie Emulgatoren und Stabilisatoren, enthalten. Zweckmäßig verwendete aushärtende Bindemittel sind Mischpolymerisate aus Acryl- und Methacrylsäureestern mit Styrol oder Ethylen-Vinyllaurat-Vinylchlorid. Andere brauchbare aushärtende Bindemittel sind reine Acrylate, Styrolacrylate sowie andere vorzugsweise verseifungsbeständige Polymerisate oder Mischpolymerisate. Die verwendbaren Siliconharze sind beispielsweise solche mit Alkyl- oder Alkoxygruppen, wobei sie vorzugsweise in Wasser emulgierbar oder emulgiert sind.

Die gegebenenfalls zugesetzten üblichen Additive können gegebenenfalls hydrophobiert sein und sind beispielsweise Verdickungsmittel, wie Polyurethanverdickungsmittel, Netzmittel und/oder Entschäumer, die jeweils zweckmäßig in kleinen Mengen, insbesondere in Mengen unter 2 Gew.% des Feststoffanteils des Beschichtungsmittels, zugegeben werden.

## Patentansprüche

1. Verwendung von Formkörpern mit einer Oberflächenstruktur aus auf der Oberfläche der Formkörper befestigten Teilchen mit einer wenigstens bimodalen Teilchengrößenverteilung, wobei ein Teilchengrößenbereich (A) einen mittleren Teilchendurchmesser von mindestens 5 µm besitzt und ein anderer Teilchengrößenbereich (B) einen mittleren Teilchendurchmesser von höchstens 3 µm besitzt, und wobei das Gewichtsverhältnis der Teilchen des Teilchengrößenbereichs (A) zu den Teilchen des Teilchengrößenbereiches (B) im Bereich von 0,01:1 bis 12:1 liegt, und wobei der statische Kontaktwinkel nach dreiminütiger Äquilibrierung größer als 130° ist, als Füllkörper oder Packungen von Stoffaustauschkolonnen.

2. Verwendung von Formkörpern nach Anspruch 1 **dadurch gekennzeichnet, daß** das Gewichtsverhältnis der Teilchen des Teilchengrößenbereiches (A) zu den Teilchen des Teilchengrößenbereiches (B) im Bereich von 0,3:1 bis 10:1 liegt.

3. Verwendung von Formkörpern nach einem der Ansprüche 1 oder 2, **dadurch gekennzeichnet, daß** das Gewichtsverhältnis der Teilchen des Teilchengrößenbereiches (A) zu den Teilchen des Teilchengrößenbereiches (B) im Bereich von 1,0:1 bis 2,5:1 liegt.

## Claims

1. Use of shaped articles having a surface structure consisting of particles attached to the surfaces of the shaped articles, the particles having an at least bimodal particle size distribution, wherein one particle size range (A) has a mean particle diameter of at least 5 µm and another particle size range (B) has a mean particle diameter not exceeding 3 µm, and wherein the weight ratio of the particles in particle size range (A) to the particles in particle size range (B) lies in the range of between 0.01:1 to 12:1, and wherein the static contact angle is greater than 130° after equilibration for three minutes, as packing bodies or packings of material exchange columns.

2. Use of shaped articles according to claim 1, **characterized in that** the weight ratio of the particles in particle size range (A) to the particles in particle size range (B) lies in the range of between 0.3:1 to 10:1.

3. Use of shaped articles according to one of claims 1 or 2, **characterized in that** the weight ratio of the particles in particle size range (A) to the particles in particle size range (B) lies in the range of between 1.0:1 to 2.5:1.

## Revendications

1. Utilisation d'objets moulés avec une structure en surface à base de particules fixées sur la surface des objets moulés avec une répartition granulométrique bimodale minimale, où la valeur granulométrique (A) a un diamètre moyen d'au moins 5 µm et où une autre valeur granulométrique (B) un diamètre moyen de maximum 3 µm, où le rapport de poids des particules de valeur granulométrique (A) vis-à-vis de particules de valeur granulométrique (B) se situe à une échelle entre 0 ,01 :1 et 12 :1, et où l'angle de contact statique après équilibrage pendant trois minutes est supérieur à 130°, en tant que pièces de remplissage ou garnitures de colonnes d'échange de matières.

2. Utilisation d'objets moulés selon la revendication n°1, **caractérisés en ce que** le rapport de poids des particules de la valeur granulométrique (A) vis-à-vis des particules de valeur granulométrique (B) se situe à une échelle de 0,3 :1 à 10 :1.

3. Utilisation d'objets moulés selon les revendications 1 et 2, **caractérisés en ce que** le rapport de poids des particules de la valeur granulométrique (A) vis-à-vis des particules de la valeur granulométrique (B) se situe à une échelle de 1,0 :1 à 2,5 :1.
